# EUROPEAN PATENT SPECIFICATION

(11) **EP 4 611 160 B1**
(45) Date of publication and mention of the grant of the patent: **25.11.2026**
(21) Application number: 24877440.8
(22) Date of filing: 26.09.2024
(51) Int. Cl.: H01M 50/517, H01M 50/593, H01M 50/588, H01M 50/502, H01M 50/211

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 12.10.2023 KR 20230135731
(43) Date of publication of application: 03.09.2025
(73) Proprietor: LG Energy Solution, Ltd., Seoul 07335 (KR)
(72) Inventor: LEE, Wonjin, Daejeon 34122 (KR); SHIN, Yongshik, Daejeon 34122 (KR)
(74) Representative: Plasseraud IP
(86) International application number: PCT/KR2024/014665
(87) International publication number: WO 2025/079902

(56) References cited:
- EP-A1- 3 783 694
- KR-A- 20210 002 919
- KR-A- 20210 002 919
- KR-A- 20210 041 285
- KR-A- 20210 043 991
- KR-A- 20210 043 991
- KR-A- 20210 103 100
- KR-A- 20210 103 100
- KR-A- 20220 053 989
- KR-A- 20220 053 989
- KR-B1- 102 367 381
- KR-B1- 102 367 381
- US-A1- 2022 209 352

## Description

### TECHNICAL FIELD

The present disclosure relates to a battery module and a battery pack including the same and, more specifically, to a battery module and a battery pack including the same, in which heat generation can be reduced through the reduction of contact resistance at a busbar connection portion.

### BACKGROUND

Secondary batteries, unlike primary batteries that cannot be recharged, refer to rechargeable batteries, and are applied not only to portable devices but also to electric vehicles (EVs) and hybrid electric vehicles (HEVs) driven by an electric power source.

The types of secondary batteries that are currently widely used include lithium-ion batteries, lithium polymer batteries, nickel-cadmium batteries, nickel-metal hydride batteries, nickel-zinc batteries, and so on. The operating voltage of such unit secondary battery cells, i.e., unit battery cells, is about 2.5V to 4.6V. Therefore, when a higher output voltage is required, a battery pack may be formed by connecting multiple battery cells in series. In addition, a battery pack may be formed by connecting multiple battery cells in parallel depending on a charge/discharge capacity required for the battery pack. Accordingly, the number of battery cells included in the battery pack may be set in various ways depending on the required output voltage or the charge/discharge capacity.

When configuring a battery pack by connecting multiple battery cells in series or in parallel, it is common to first configure a battery module including at least one battery cell, preferably multiple battery cells, and then configure a battery pack by using at least one of such battery modules and adding other components. Here, a battery module refers to a component in which multiple battery cells are connected in series or in parallel, and a battery pack refers to a component in which multiple battery modules are connected in series or in parallel to increase capacity and output.

The battery module is configured by electrically connecting multiple cells using a busbar.

In addition, the battery module includes a terminal busbar for electrically connecting one battery module to another.

In this battery module, heat is generated due to contact resistance at the point where the terminal busbar is fixed to the module. Examples of battery modules and battery packs can be found in KR 2021-0043991 A, KR 2021-0103100 A, or EP 3783694 A1.

### SUMMARY

### Technical Problem

The present disclosure aims to solve the aforementioned issues by providing a battery module and a battery pack including the same, in which heat generation can be reduced through the reduction of contact resistance at a terminal busbar fixing portion.

### Solution to Problem

A battery module according to the present disclosure is defined in the appended independent claim 1.

The fixing pin may be screw-coupled to the fixing hole in the fixing member.

The fixing body may have a rectangular column shape.

The first horizontal extension protrusion may extend horizontally from the one side surface of the fixing body.

The fixing body may further include a first side surface portion extending in a width direction of the battery module, and the first horizontal extension protrusion may be disposed at the top of the first side surface portion.

The fixing body may further include a pair of first side surface portions extending in the width direction of the battery module and spaced parallel to each other, and the first horizontal extension protrusion may be disposed at the top of each of the pair of first side surface portions.

The fixing body may further include a pair of first side surface portions extending in a width direction of the battery module and spaced parallel to each other, and a pair of second side surface portions respectively connecting the pair of first side portions and spaced apart from each other.

The battery module may further include a second horizontal extension protrusion extending outward from the other side surface of the fixing body at the top of the fixing body.

The first horizontal extension protrusion and the second horizontal extension protrusion may be seated on the second portion of the insertion groove.

The second horizontal extension protrusion may extend horizontally from the other side surface of the fixing body.

The fixing body may further include a second side surface portion of the fixing body extending in a length direction of the battery module, and the second horizontal extension protrusion may be disposed at the top of the second side surface portion.

The fixing body may further include a pair of second side surface portions extending in the length direction of the battery module and spaced parallel to each other, and the second horizontal extension protrusion may be disposed at the top of each of the pair of second side surface portions.

In addition, a battery pack may also include one or more battery modules as described above.

### Advantageous Effects of Invention

The battery module and pack according to the present disclosure have the effect of reducing contact resistance at a terminal busbar fixing portion, thereby reducing heat generation.

### BRIEF DESCRIPTION OF THE DRAWINGS

FIG. 1 is a perspective view of a battery module according to the present disclosure;
FIG. 2 is an exploded perspective view of the battery module according to the present disclosure;
FIG. 3 is a perspective view of a battery cell in the present disclosure;
FIG. 4 is a perspective view of a terminal busbar in the present disclosure;
FIG. 5 is a perspective view illustrating an insulating cover and an end plate in the present disclosure;
FIG. 6 is an enlarged view of a portion of the insulating cover exposed through an opening in the end plate in the present disclosure;
FIG. 7 is a perspective view of a fixing member in the insulating cover according to the present disclosure;
FIG. 8 is a side view of the fixing member illustrated in FIG. 7;
FIG. 9 is a cross-sectional view illustrating the state in which the terminal busbar is coupled to the fixing member in the present disclosure;
FIG. 10 is a perspective view of the fixing member according to another aspect of the present disclosure;
FIG. 11 is a plan view of the fixing member of FIG. 10;
FIG. 12 is a view illustrating a state in which the fixing member according to another aspect is separated from the insulating member;
FIG. 13 is a view illustrating a battery pack according to an aspect of the present disclosure; and
FIG. 14 is a perspective view of a vehicle equipped with the battery pack according to an aspect of the present disclosure.

### DETAILED DESCRIPTION

Advantages and characteristics of the present disclosure and methods of achieving the same will become apparent by referring to aspects described in detail below together with the accompanying drawings. However, the present disclosure is not limited to the aspects to be described below but may be implemented in various different modes. These aspects are provided merely to ensure that the present disclosure is fully disclosed and to fully inform a person ordinarily skilled in the art of the scope of the present disclosure. The present disclosure is defined by the claims only. Accordingly, in some aspects, well-known process steps, well-known device structures, and well-known techniques are not described in detail to avoid obscuring the present disclosure. Like reference numerals indicate like components throughout the specification.

In the drawings, the thicknesses of layers and regions may be exaggerated for clarity. Throughout the specification, like reference numerals are used to refer to similar elements. When a part such as a layer, a film, a region, or a plate is described as being "above" another part, this includes not only cases where the part is directly above the other part but also cases where there is still another part therebetween. Conversely, when a part is described as being "directly above" another part, this means that there is no other part therebetween. Similarly, when a part such as a layer, a film, a region, or a plate is described as being "under" another part, this includes not only cases where the part is "directly under" the other part, but also cases where there is still another part therebetween. Conversely, when a part is described as being "directly under" another part, this means that there is no other part therebetween.

A battery module 1000 according to an aspect of the present disclosure will be described in detail with reference to the drawings.

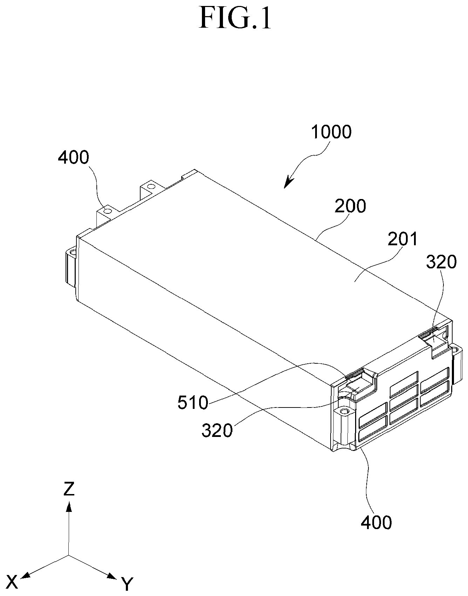

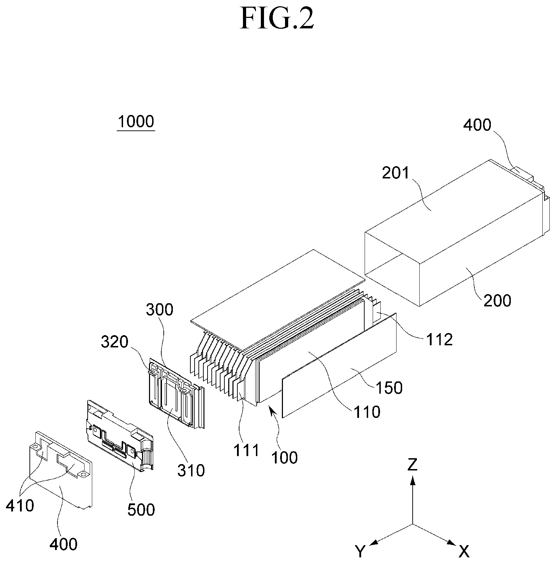

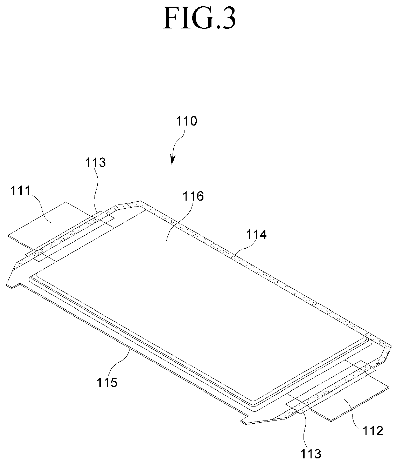

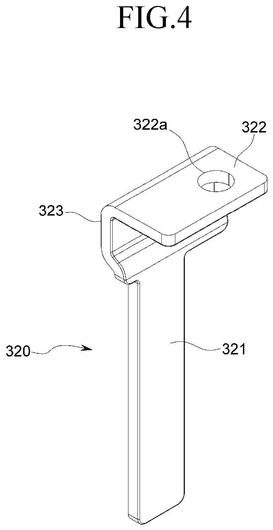

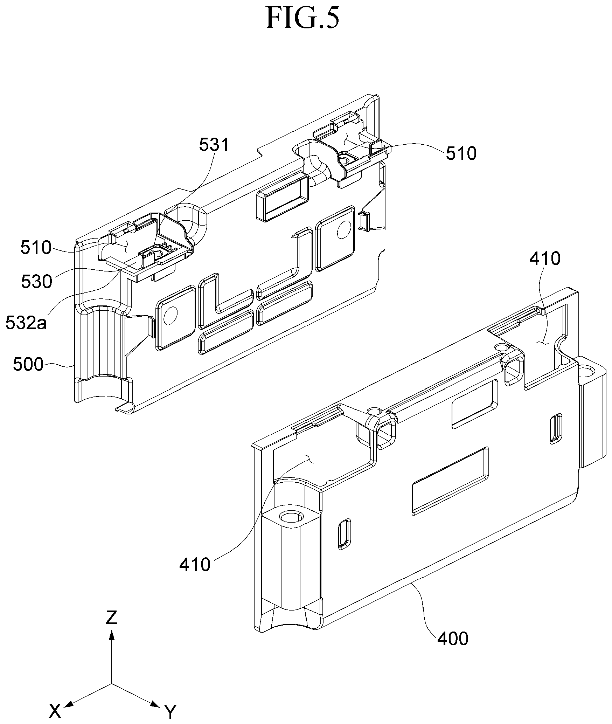

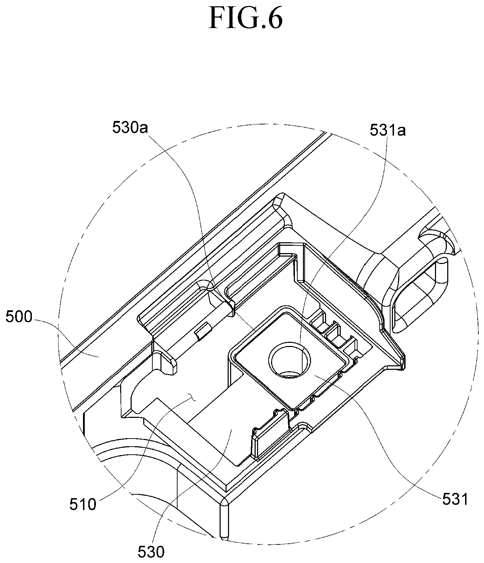

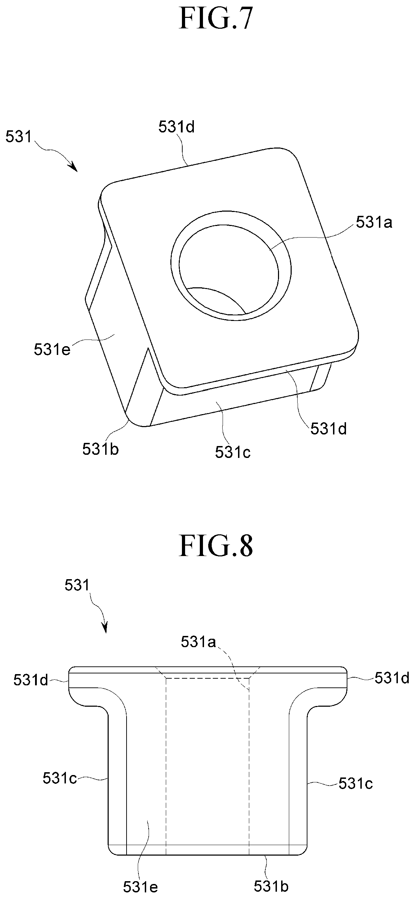

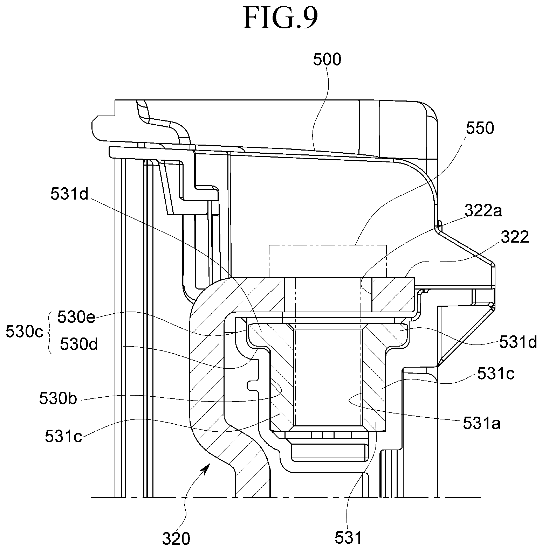

FIG. 1 is a perspective view of a battery module according to the present disclosure. FIG. 2 is an exploded perspective view of the battery module according to the present disclosure. FIG. 3 is a perspective view of a battery cell in the present disclosure. FIG. 4 is a perspective view of a terminal busbar in the present disclosure. FIG. 5 is a perspective view illustrating an insulating cover and an end plate in the present disclosure. FIG. 6 is an enlarged view of a portion of the insulating cover exposed through an opening in the end plate in the present disclosure. FIG. 7 is a perspective view of a fixing member in the insulating cover according to the present disclosure. FIG. 8 is a side view of the fixing member illustrated in FIG. 7. FIG. 9 is a cross-sectional view illustrating the state in which the terminal busbar is coupled to the fixing member in the present disclosure.

According to an aspect of the present disclosure, a battery module 1000 may include a battery cell stack 100 in which multiple battery cells 110 are stacked, a module case 200 that accommodates the battery cell stack 100, a busbar frame 300 positioned on the front surface and/or the rear surface of the battery cell stack 100, an end plate 400 that covers the front surface and/or the rear surface of the battery cell stack 100, and busbars 310 and 320 mounted on the busbar frame 300.

The battery cell stack 100 may be formed by stacking multiple battery cells 110 in one direction, and the multiple battery cells 110 may be electrically connected. The direction in which the multiple battery cells 110 are stacked may be the X-axis direction (or the -X-axis direction) in FIG. 2.

The direction from the front surface to the rear surface of the battery cell stack 100, or *vice versa*, may be defined as the length direction of the battery cell stack 100, which may correspond to the Y-axis direction in the drawing. In addition, the direction from the top surface to the bottom surface of the battery cell stack 100, or vice versa, may be defined as the width direction of the battery cell stack 100, which may correspond to the Z-axis direction in the drawing.

The length direction of the battery cell stack 100 may be substantially the same as the length direction of the battery cells 110. Electrode leads 111 and 112 of the battery cells 110 may be positioned on the front and rear surfaces of the battery cell stack 100, and busbars 310 and 320 of the battery module 1000 may be disposed near the front and rear surfaces of the battery cell stack 100 to facilitate electrical connection with the electrode leads 111 and 112.

The battery cells 110 may be provided as pouch-type battery cells, and the number of pouch-type battery cells that can be stacked per unit area may be maximized. However, the battery cells 110 are not necessarily provided as the pouch-type and may also be provided in prismatic, cylindrical, or various other types.

Each battery cell 110 provided in the pouch-type may include an electrode assembly and a cell case 115 that accommodates the electrode assembly (see FIG. 3).

The cell case 115 of the battery cell 110 is for accommodating the electrode assembly and may be a pouch-type cell case 115. The cell case 115 may include a lower case and an upper case that covers the lower case, and the upper and lower cases may be integrally formed. In addition, as illustrated in FIG. 4, the connection portions of the upper and lower cases may be bent and folded. As illustrated, the upper case may completely cover the lower case, and a sealing portion 114 may be formed around the periphery.

Both the upper and lower cases may have a laminate structure including an inner coating layer, a metal layer, and an outer coating layer. The inner coating layer is positioned on the inside of the cell case 115 relative to the metal layer and should have insulation properties and electrolyte resistance since it is in direct contact with the electrode assembly. In addition, for sealing, the sealing area where the inner layers are heat-bonded is required to have excellent thermal-sealing strength. The metal layer, positioned between the inner and outer coating layers, serves as a barrier layer that prevents moisture or various gases from penetrating into the cell from the outside. Preferably, a lightweight and highly formable aluminum (Al) thin film may be used as the material for the metal layer in contact with the inner coating layer. The outer coating layer is positioned on the outside of the cell case 115 relative to the metal layer. This outer coating layer may be made of a heat-resistant polymer with excellent tensile strength, moisture impermeability, and air impermeability to ensure heat resistance and chemical resistance while protecting the electrode assembly. Examples of such polymers include nylon or polyethylene terephthalate.

Recess 116 may be formed in the upper and lower cases, respectively, and the electrode assembly may be accommodated in the recesses 116 of the upper and lower cases.

The electrode assembly accommodated in the cell case 115 may be one selected from a group consisting of: a jelly-roll type electrode assembly in which a separator is interposed between long sheet-shaped positive and negative electrodes and then wound; a stacked type electrode assembly including unit cells in which rectangular positive and negative electrodes are stacked with a separator interposed therebetween; a stack-folding type electrode assembly in which unit cells are wound with a long separator film; or a lamination-stacked type electrode assembly in which unit cells are laminated with a separator interposed therebetween and attached to each other.

The electrode assembly may also include two electrode tabs and two electrode leads 111 and 112 respectively connected to the electrode tabs via welds.

One of the two electrode leads 111 and 112 may be a positive electrode lead connected to the positive electrode tab, and the remaining one of the electrode leads 111 and 112 may be a negative electrode lead connected to the negative electrode tab.

Lead films 113 may be attached to the electrode leads 111 and 112, respectively. The lead films 113 coupled to the electrode leads 111 and 112 may be positioned between the electrode leads 111 and 112 and the cell case 115 to prevent the occurrence of short circuit between the electrode leads 111 and 112 and the cell case 115 and to enhance sealing, thereby preventing electrolyte leakage or the like.

The two electrode leads 111 and 112 are illustrated as being disposed on opposite sides of the electrode assembly, but may also be disposed on only one side of the electrode assembly depending on the arrangement of the electrode tabs.

The module case 200 may protect the battery cell stack 100 and the associated electrical components from external physical impact, and the module case 200 may accommodate the battery cell stack 100 and the associated electrical components in the internal space of the module case 200.

The structure of the module case 200 may vary, and may be, for example, a mono-frame structure. Here, the mono-frame may be in the form of a metal sheet in which the top surface, the bottom surface, and opposite side surfaces are integrated. The mono-frame may be manufactured through extrusion molding. As another example, the module case 200 may have a structure obtained by coupling a U-shaped frame and an upper plate (top surface 201). In the case of the structure where the U-shaped frame and the upper plate are coupled, the structure of the module case 200 may be formed by coupling the upper plate to the top side of the U-shaped frame, which is a metal sheet in which the bottom surface and the opposite side surfaces are coupled or integrated. Each frame or plate may be manufactured through press forming. In addition, the structure of the module case 200 may be provided as a structure of an L-shaped frame, in addition to the mono-frame or the U-shaped frame, and may also be provided in various structures not described in the above examples.

The structure of the module case 200 may be provided in an open form along the length direction of the battery cell stack 100. The front and rear surfaces of the battery cell stack 100 may not be covered by the module case 200. The electrode leads 111 and 112 of the battery cells 110 may not be covered by the module case 200. The front and rear surfaces of the battery cell stack 100 may be covered by the busbar frames 300, end plates 400, or busbars 310 and 320, which will be described later, and through this, the front and rear surfaces of the battery cell stack 100 may be protected from external physical impacts.

A compression pad 150 may be positioned between the battery cell stack 100 and one side surface among the inner surfaces of the module case 200.

The compression pad 150 may be disposed to face the outermost battery cell 110 of the battery cell stack 100 in the X-axis direction.

In addition, although not illustrated, a thermal resin may be injected into the space between the battery cell stack 100 and the inner surfaces of the module case 200, and a thermal resin layer (not illustrated) may be formed between the battery cell stack 100 and one side surface among the inner surfaces of the module case 200 by the injected thermal resin. At this time, the thermal resin layer may be positioned on the Z-axis of the battery cell stack 100, and may be formed between the bottom surface of the module case 200 positioned on the -Z axis and the battery cell stack 100.

The busbar frame 300 may be positioned on one surface of the battery cell stack 100 to cover the one surface of the battery cell stack 100 while guiding the connection between the battery cell stack 100 and an external device. Specifically, the busbar frame 300 may be positioned on the front or rear surface of the battery cell stack 100, as illustrated, and may also be positioned on the top surface, the bottom surface, or a side surface. At least one of the busbars 310 and 320 and a module connector may be mounted on the busbar frame 300. As illustrated in FIG. 2, one surface of the busbar frame 300 may be connected to one surface or the other surface of the battery cell stack 100, and the other surface of the busbar frame 300 may be connected to the busbars 310 and 320.

The busbar frame 300 may include electrically insulating material. The busbar frame 300 may limit contact between the busbars 310 and 320 and other portions of the battery cells 110 other than the portions bonded to the electrode leads 111 and 112, and may prevent electrical short circuits from occurring.

The busbar frame 300 may be positioned on each of the opposite sides of the battery cell stack 100.

The busbars 310 and 320 may be mounted on one surface of the busbar frame 300 and may electrically connect the battery cell stack 100 or battery cells 110 to an external device circuit. The busbars 310 and 320 may be protected from external impacts or the like by being positioned between the battery cell stack 100 or the busbar frame 300 and the end plate 400, and degradation in durability due to external moisture or the like may be minimized.

The busbars 310 and 320 may be electrically connected to the battery cell stack 100 via the electrode leads 111 and 112 of the battery cells 110.

Specifically, the electrode leads 111 and 112 of the battery cells 110 may pass through lead slits formed in the busbar frame 300, and may then be bent and connected to the busbars 310 and 320. The battery cells 110 constituting the battery cell stack 100 may be connected in series or parallel by the busbars 310 and 320.

The busbars 310 and 320 may include a terminal busbar 320 for electrically connecting one battery module 100 to another battery module 100. To be connected to another battery module 100, at least a portion of the terminal busbar 320 may be exposed outside the end plate 400, and the end plate 400 may be provided with a terminal opening 410 for this purpose.

The terminal busbar 320 may have one end portion (a second portion 322) exposed through an opening 510 of the insulating cover 500 and the terminal opening 410 of the end plate 400.

As illustrated in FIG. 4, the terminal busbar 320 may include a first portion 321 connected to the electrode leads 111 and 112 of the battery cells 110 and a second portion 322 exposed outside through the terminal opening 410. The terminal busbar 320 may further include a bending portion 323 formed between the first portion 321 and the second portion 322.

In the terminal busbar 320, the first portion 321 may be connected to the second portion 322 via the bending portion, and one surface of the first portion 321 and one surface of the second portion 322 may be perpendicular to each other. That is, by forming the bent bending portion 323 in the terminal busbar 320, the second portion 322 may protrude and be seated on a seating portion 530 on the insulating cover 500, and the second portion 322 may be electrically connected to a pack busbar. A coupling hole 322a is formed in the second portion 322, which constitutes one end portion of the terminal busbar 320, and the second portion 322 of the terminal busbar 320 is fixed by a fixing pin 550 inserted into the coupling hole 322a.

The end plate 400 may cover the open surface of the module case 200 to protect the battery cell stack 100 and the electrical components connected thereto from external physical impacts. For this purpose, the end plate 400 may be made of a material with a predetermined strength. For example, the end plate 400 may include a metal such as aluminum or a plastic material.

Terminal openings 410 may be formed in the end plate 400. The terminal openings 410 may be disposed on opposite sides of the end plate 400, and a portion of the insulating cover 500 and one end portion (the second portion 322) of the terminal busbar 320 may be exposed through the terminal openings 410.

In addition, a connector opening may be positioned between the terminal openings 410 on the opposite sides of the end plate 400, and a module connector may be exposed outside through the connector opening.

The end plate 400 may be coupled with the module case 200 while covering the busbar frame 300 or the busbars 310 and 320 positioned on one surface of the battery cell stack 100. Each edge of the end plate 400 may be coupled to the corresponding edges of the module case 200 by welding, bolting, hook fastening, or other methods.

The end plate 400 may be positioned on each of the front and rear surfaces of the module case 200 to cover the front and rear surfaces of the battery cell stack 100.

In addition, an insulating cover 500 for electrical insulation may be positioned between the end plate 400 and the busbar frame 300. That is, the busbar frame 300, the insulating cover 500, and the end plate 400 may be sequentially positioned outward from the battery cell stack 100. Like the end plates 400, multiple busbar frames 300 and insulating covers 500 may be provided.

The insulating cover 500 may include electrically insulating material and may block contact between the busbars 310 and 320 and the end plate 400.

The insulating cover 500 may include an opening 510 and a seating portion 530. The opening 510 may be disposed on each of opposite sides of the upper portion of the insulating cover 500, and one end portion (the second portion 322) of the terminal busbar 320 may be exposed through the opening 510.

In addition, a connector opening may be positioned between the openings 510 positioned on the opposite sides of the insulating cover 500, and a module connector may be exposed outside through the connector opening.

The insulating cover 500 may be positioned on the inner surface of the end plate 400 and may be, but not necessarily, in close contact with the inner surface of the end plate 400.

As described above, one end portion (the second portion 322) of the terminal busbar 320 may be exposed through the opening 510, and the exposed end portion (the second portion 322) of the terminal busbar 320 may be seated on the seating portion 530. Therefore, the seating portion 530 may be disposed adjacent to the opening 510 and may be disposed on the upper outer surface.

On the top surface of the seating portion 530, the second portion 322 of the terminal busbar 320 may be seated, and thus the top surface of the seating portion 530 may form the seating surface. In addition, as illustrated in FIGS. 5 and 6, the seating portion 530 may include a fixing member 531 for fixing the second portion 322 of the terminal busbar 320.

As illustrated in FIGS. 7 and 8, the fixing member 531 may include a fixing body 531b and a fixing hole 531a.

The fixing body 531b in this aspect may have a substantially rectangular column shape and may be inserted into an insertion groove 530a in the seating portion 530.

Specifically, the fixing body 531b may include a pair of first side surface portions 531c and a pair of second side surface portions 531e.

The pair of first side surface portions 531c may be disposed on opposite side surfaces of the fixing body 531b spaced parallel to each other, and may be disposed parallel to the end plates 400 disposed on the front and rear surfaces of the battery module 1000. The first side surface portions 531c may extend in the width direction of the battery module 1000 (in the X-axis direction in the drawing).

The pair of second side surface portions 531e may extend in the length direction of the battery module 1000 (in the Y-axis direction in the drawing), and each of the second side surface portions 531e may be disposed to connect the pair of first side surface portions 531c. The pair of second side surface portions 531e may be disposed on opposite side surfaces of the fixing body 531b and spaced parallel to each other and may be disposed in a direction orthogonal to the end plates 400 disposed on the front and rear surfaces of the battery module 1000.

The four corners where the first side surface portions 531c and the second side surface portions 531e of the fixing body 531b are connected may be rounded.

The fixing hole 531a may be formed in the fixing body 531b, and the fixing pin 550 may be inserted into the fixing hole 531a. The fixing hole 531a may have a circular shape, and a female thread may be formed on the inner peripheral surface of the fixing hole 531a. When the female thread is formed on the inner peripheral surface of the fixing hole 531a, a male thread may be formed on the outer peripheral surface of the fixing pin 550, so that the fixing hole and the fixing pin can be screw-coupled to each other. As the fixing pin 550 is rotated during the screw-coupling of the fixing pin 550 to the fixing hole 531a, the fixing member 531 may be rotated. However, since the fixing body 531b of the fixing member 531 has a rectangular column shape, the top portion of the fixing member 531 also has a rectangular shape, and the insertion groove 530a is a rectangular groove, the fixing member 531 can be held in place without rotating, thereby enabling the fixing pin 550 to be stably coupled to the fixing hole 531a.

The fixing member 531 may further include first horizontal extension protrusions 531d at the top of the fixing body 531b.

The first horizontal extension protrusions 531d may protrude horizontally outward from the top of the first side surface portions 531c of the fixing body 531b. Specifically, the first horizontal extension protrusions 531d may extend in the length direction of the battery module 1000 (in the Y-axis or -Y-axis direction in the drawing, or toward the end plates 500) from the top of the first side surface portions 531c.

The first horizontal extension protrusions 531d may be respectively formed on the pair of first side surface portions 531c of the fixing body 531b, and in this case, the pair of first horizontal extension protrusions 531d disposed on the pair of first side surface portions 531c may extend in opposite directions.

The length of the first horizontal extension protrusions 531d in the width direction of the battery module 1000 (in the X-axis direction) may be the same as that of the first side surface portions 531c.

The upper end of the fixing member 531, which includes the first horizontal extension protrusions 531d, may have a rectangular shape, and its corners may be rounded.

The fixing member 531 with this configuration may be inserted into the insertion groove 530a in the seating portion 530.

As illustrated in FIG. 9, the insertion groove 530a in the seating portion 530 may be formed to correspond to the outer shape of the fixing member 531, in which the insertion groove 530a may include, at its lower portion, a first portion 530b where the fixing body 531b is inserted, and include, at its upper portion, a second portion 530c where the first horizontal extension protrusions 531d are seated.

In the insertion groove 530a, the lower portion of the fixing body 531b, excluding the first horizontal extension protrusions 531d, may be inserted into the first portion 530b. In this aspect, the first portion 530b may have a cross-section that is substantially rectangular to correspond to the fixing body 531b, and the four corners may be rounded.

The first horizontal extension protrusions 531d may be inserted into the second portion 530c disposed above the first portion 530b in the insertion groove 530a, the second portion 530c may extend outward from the first portion 530b to allow the first horizontal extension protrusions 531d to be seated thereon. The second portion 530 may include a first extension 530d and a first vertical wall 530e.

The first extension 530d may extend outward in a horizontal direction from the first portion 530b, and the first horizontal extension protrusions 531d may be seated on this first extension 530d. The first extension 530d may extend in the length direction of the battery module 1000 (in the Y-axis direction or toward the end plates 400 in the drawing) from the upper end of the first portion 530b.

The first vertical wall 530e may extend upward from the first extension 530d.

In addition, the second portion 530c may be formed on each of the opposite side surfaces of the first portion 530b of the insertion groove 530a to allow the pair of first horizontal extension protrusions 531d to be seated thereon.

The second portion 322 of the terminal busbar 320 may be fixed to the insulating cover 500 by inserting the above-described fixing member 531 into the insertion groove 530a of the seating portion 530, and fixedly coupling the fixing pin 550, which is inserted into the coupling hole 322a formed in the second portion 322 of the terminal busbar 320, to the fixing hole 531a, as illustrated in FIG. 9. As another example, the fixing pin 550 inserted into the coupling hole 322a in the terminal busbar 320 may be fixedly coupled to the bottom of the insertion groove 530a in the seating portion 530. In this case, a female thread may be formed at the bottom of the insertion groove 530a, allowing the fixing pin 550 to be screw-coupled thereto.

The second portion 322 of the terminal busbar 320 is seated on the seating portion 530 in the insulating cover 500 and is seated on and comes into contact with the fixing member 531 disposed on the seating portion 530, which may result in heat generation due to contact resistance.

In this aspect, the second portion 322 of the terminal busbar 320 is seated on and comes into contact with the top of the fixing member 531, which includes the first horizontal extension protrusions 531d. Since the fixing member 531 includes the first horizontal extension protrusions 531d, the contact area between the second portion 322 of the terminal busbar 320 and the fixing member 531 is increased, thereby reducing contact resistance and hence heat generation.

The seating portion 530 may be exposed outside through the terminal opening 410 in the end plate 400 along with the opening 510. The seating portion 530 may be formed integrally with the insulating cover 500 or may be coupled separately from the insulating cover 500.

In addition, a terminal cover (not illustrated), which covers one end portion (the second portion 322) of the terminal busbar 320, may be disposed on the insulating cover 500.

Meanwhile, the electrical connection between battery modules may be made through a pack busbar (not illustrated). The pack busbar is a component configured to connect one battery module 1000 to an adjacent battery module 1000 or a battery disconnect unit (BDU) and may be connected to an exposed end portion (the second portion 322) of the terminal busbar 320. For example, the pack busbar 1100 may overlap with and be connected to the top of the end portion (second portion 322) of the terminal busbar 320.

One end of the pack busbar may be placed on and overlap with the second portion 322 of the terminal busbar 320, then the fixing pin 550 may be sequentially inserted into the coupling hole in the pack busbar and the coupling hole 322a in the second portion 322 of the terminal busbar 320, and then the fixing pin 550 may be fixed to the fixing hole 531a in the seating portion 530, thereby connecting the pack busbar to the terminal busbar 320.

In addition, the second portion 322 of the terminal busbar 320 may be fixed to the insulating cover 500 along with the pack busbar by the fixing pin 550.

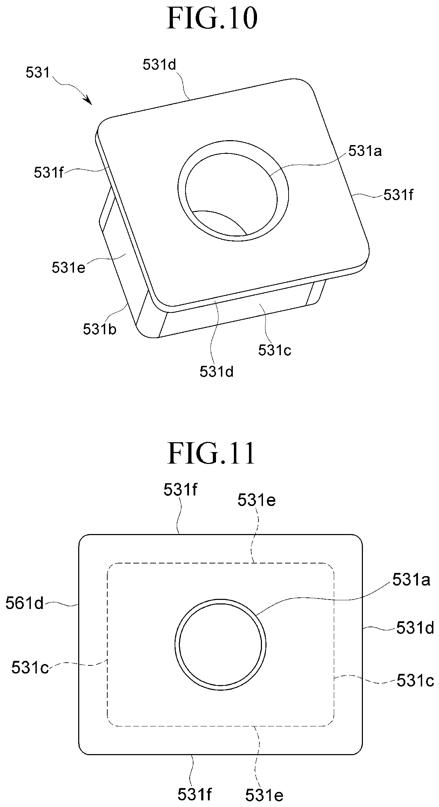

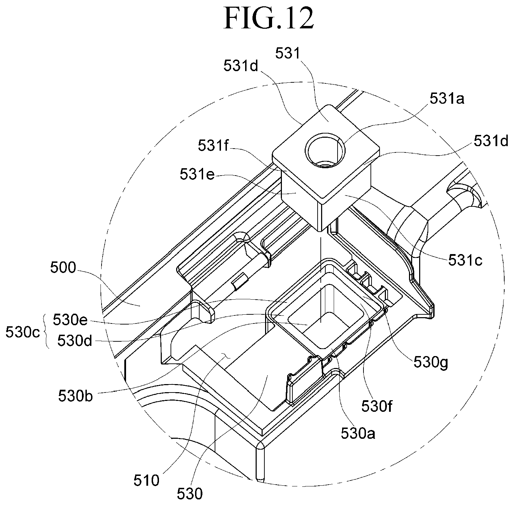

Meanwhile, FIGS. 10 to 12 are views illustrating the fixing member 531 in the battery module 1000 according to another aspect of the present disclosure. FIG. 10 is a perspective view of the fixing member according to another aspect of the present disclosure, FIG. 11 is a plan view of the fixing member of FIG. 10, and FIG. 12 is a view illustrating a state in which the fixing member according to another aspect is separated from the insulating member.

As illustrated, in another aspect, the fixing member 531 may further include second horizontal extension protrusions 531f at the top of the fixing body 531b, in addition to the first horizontal extension protrusions 531d.

The second horizontal extension protrusions 531f may protrude horizontally outward from the top of the second side surface portions 531e of the fixing body 531b. Specifically, the second horizontal extension protrusions 531f may extend from the upper end of the second side surface portions 531e in the width direction of the battery module 1000 (in the X-axis or -X-axis direction in the drawing).

The second horizontal extension protrusions 531f may be respectively formed on the pair of second side surface portions 531e of the fixing body 531b, and in this case, the pair of second horizontal extension protrusions 531f disposed on the pair of second side surface portions 531e may extend in opposite directions.

In another aspect, the top of the fixing member 531 may include the first horizontal extension protrusions 531d and the second horizontal extension protrusions 531f and may extend outward from the upper end edges of the fixing body 531b along the entire perimeter. The top of the fixing member 531 in a plan view may have a larger surface area than the cross-sectional area of the fixing body 531b. The upper end of the fixing member 531, which includes the first horizontal extension protrusions 531d and the second horizontal extension protrusions 531f, may form a rectangular shape, of which the corners may be rounded.

In another aspect, the insertion groove 530a in the seating portion 530, into which the fixing member 531 is inserted, may be formed to correspond to the outer shape of the fixing member 531, and may include a first portion 530b where the fixing body 531b is inserted and a second portion 530c where the first horizontal extension protrusions 531d and the second horizontal extension protrusions 531f are seated.

Into the second portion 530c of the insertion groove 530a, the first horizontal extension protrusions 531d and the second horizontal extension protrusions 531f may be inserted, and the second portion 530c may further include a second extension 530f and a second vertical wall 530g in addition to the first extension 530d and the first vertical wall 530e, to allow the first and second horizontal extension protrusions 531d and 531f to be seated thereon.

The second extension 530f may extend horizontally outward from the side surface of the first portion 530b where the first extension 530d is not disposed, and the second horizontal extension protrusions 531f may be seated on the second extension 530f. The second extension 530f may extend from the upper end of the first portion 530b in the width direction of the battery module 1000 (in the X-axis or -X-axis direction in the drawing).

The second vertical wall 530e may extend upward from the second extension 530f.

In addition, the second portion 530c may be formed on each of the opposite side surfaces of the second portion 530c of the insertion groove 530a to allow the pair of second horizontal extension protrusions 531f to be seated thereon.

In another aspect, the other components may be the same as in the previous aspect.

As described above, in another aspect, the second portion 322 of the terminal busbar 320 is seated on and comes into contact with the top of the fixing member 531, which includes the first horizontal extension protrusions 531d and the second horizontal extension protrusions 531f, and the fixing member 351 includes the second horizontal extension protrusions 531f in addition to the first horizontal extension protrusions 531d at the top of the fixing body 531b, which further increases the contact area between the second portion 322 of the terminal busbar 320 and the fixing member 531, so that contact resistance and hence heat generation can be further reduced.

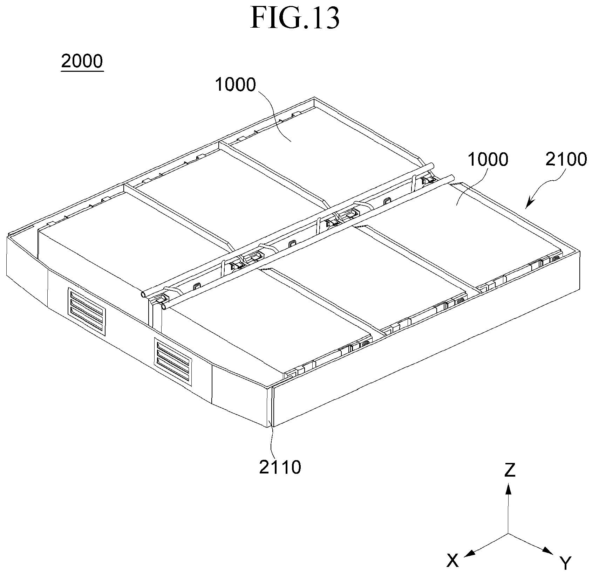

One or more battery modules 1000 according to the present disclosure, as described above, may form a battery pack 2000. As illustrated in FIG. 13, the battery pack 2000 according to an aspect of the present disclosure may accommodate at least one battery module 1000 inside a pack case 2100, and may include various control and protection systems such as a battery management system (BMS) and a cooling system.

The pack case 2100 may include a lower housing 2110 and an upper housing (not illustrated) coupled to the top of the lower housing 2110, and multiple battery modules 1000 may be accommodated within the internal spaces of the lower housing 2110 and the upper housing.

Meanwhile, the aspect of the present disclosure illustrates an example where multiple battery modules 1000 are accommodated inside the battery pack 2000, but multiple battery cells 110 may also be directly disposed inside the battery pack 2000.

The battery module 1000 and the battery pack 2000 configured in this manner according to the present disclosure are applicable to various devices. Specifically, the battery module and the battery pack are applicable to transportation means, such as an electric bicycle, an electric vehicle V, and a hybrid vehicle, or an energy storage system (ESS). However, without being limited thereto, they are applicable to various devices capable of using secondary batteries.

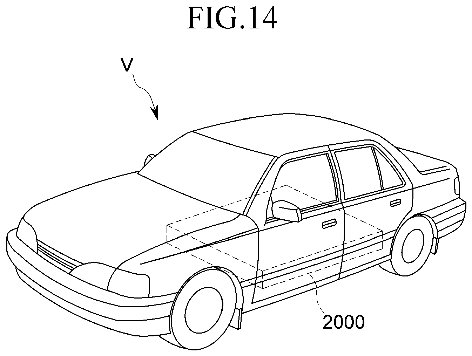

FIG. 14 is a view illustrating an electric vehicle V equipped with the battery pack 2000. In the electric vehicle V, the wheels are driven by a motor powered by the battery pack 2000, enabling the electric vehicle to operate.

The present disclosure has been described with reference to aspects as discussed above, but is not limited to these aspects. Various modifications and changes can be made by those skilled in the art.

### Industrial Applicability

The present disclosure is able to provide a battery module and pack in which contact resistance is reduced at a terminal busbar fixing portion, thereby reducing heat generation.

## Claims

1. A battery module (1000) comprising:
a battery cell stack (100) in which multiple battery cells (110) are stacked;
a module case (200) configured to accommodate the battery cell stack (100);
a terminal busbar (320) disposed on one side of the battery cell stack (100);
an insulating cover (500) disposed on one side of the module case (200), an end portion (322) of the terminal busbar (320) being positioned on the insulating cover (500);
a fixing member (531) having a fixing hole (531a) configured to fix the end portion (322) of the terminal busbar (320), the fixing member (531) being disposed below the end portion (322) of the terminal busbar (320) in the insulating cover (500); and
a fixing pin (550) configured to be coupled to the fixing hole (531a) in the fixing member (531) through the end portion (322) of the terminal busbar (320),
wherein the fixing member (531) includes a fixing body (531b) including the fixing hole (531a), and a first horizontal extension protrusion (531d) extending outward from a side surface of the fixing body (531b) at a top of the fixing body (531b),
wherein the insulating cover (500) includes an insertion groove (530a) into which the fixing member (531) is inserted, and
wherein the insertion groove (530a) includes a first portion (530b) into which the fixing body (531b) is inserted, and a second portion (530c) on which the first horizontal extension protrusion (531d) is seated, and
wherein the end portion (322) of the terminal busbar (320) is seated on and comes into contact with the first 0horizontal extension protrusion (531d).

2. The battery module (1000) of claim 1, wherein the fixing pin (550) is configured to be screw-coupled to the fixing hole (531a) in the fixing member (531).

3. The battery module (1000) of claim 1, wherein the fixing body (531b) has a rectangular column shape.

4. The battery module (1000) of claim 1, wherein the first horizontal extension protrusion (531d) extends horizontally from the side surface of the fixing body (531b).

5. The battery module (1000) of claim 1, wherein the fixing body (531b) further includes a first side surface portion (531c) extending in a width direction of the battery module (1000), and
wherein the first horizontal extension protrusion (531d) is disposed at a top of the first side surface portion (531c).

6. The battery module (1000) of claim 1, wherein the fixing body (531b) further comprises a pair of first side surface portions (531c) extending in a width direction of the battery module (1000) and spaced parallel to each other, and
wherein the first horizontal extension protrusion (531d) is disposed at a top of each first side surface portions (531c) of the pair of first side surface portions (531c).

7. The battery module (1000) of claim 1, wherein the fixing body (531b) further comprises:
a pair of first side surface portions (531c) extending in a width direction of the battery module (1000) and spaced parallel to each other; and
a pair of second side surface portions (531e) respectively connecting the pair of first side surface portions (531c) and spaced apart from each other.

8. The battery module (1000) of claim 1, further comprising:
a second horizontal extension protrusion (531f) extending outward from a further side surface of the fixing body (531b) at a top of the fixing body (531b).

9. The battery module (1000) of claim 8, wherein the first horizontal extension protrusion (531d) and the second horizontal extension protrusion (531f) are seated on the second portion (530c) of the insertion groove (530a).

10. The battery module (1000) of claim 8, wherein the second horizontal extension protrusion (531f) extends horizontally from the further side surface of the fixing body (531b).

11. The battery module (1000) of claim 8, wherein the fixing body (531b) further comprises a side surface portion (531e) of the fixing body (531b) extending in a length direction of the battery module (1000), and
wherein the second horizontal extension protrusion (531f) is disposed at a top of the side surface portion (531e).

12. The battery module (1000) of claim 8, wherein the fixing body (531b) further comprises a pair of side surface portions (531e) extending in a length direction of the battery module (1000) and spaced parallel to each other, and
wherein the second horizontal extension protrusion (531f) is disposed at a top of each of the pair of side surface portions (531e).

## Patentansprüche

1. Batteriemodul (1000), umfassend:
einen Batteriezellenstapel (100), in dem mehrere Batteriezellen (110) gestapelt sind;
ein Modulgehäuse (200), das so konfiguriert ist, dass es den Batteriezellenstapel (100) aufnimmt;
eine Anschlussstromschiene (320), die auf einer Seite des Batteriezellenstapels (100) angeordnet ist;
eine Isolierabdeckung (500), die auf einer Seite des Modulgehäuses (200) angeordnet ist, wobei ein Endabschnitt (322) der Anschlussstromschiene (320) auf der Isolierabdeckung (500) positioniert ist;
ein Befestigungselement (531) mit einem Befestigungsloch (531a), das so konfiguriert ist, dass es den Endabschnitt (322) der Anschlussstromschiene (320) befestigt, wobei das Befestigungselement (531) unter dem Endabschnitt (322) der Anschlussstromschiene (320) in der Isolierabdeckung (500) angeordnet ist; und
einen Befestigungsstift (550), der so konfiguriert ist, dass er mit dem Befestigungsloch (531a) im Befestigungselement (531) durch den Endabschnitt (322) der Anschlussstromschiene (320) gekoppelt wird,
wobei das Befestigungselement (531) einen Befestigungskörper (531b), der das Befestigungsloch (531a) enthält, und einen ersten horizontalen Verlängerungsvorsprung (531d) enthält, der sich von einer Seitenfläche des Befestigungskörpers (531b) an einer Oberseite des Befestigungskörpers (531b) nach außen erstreckt,
wobei die Isolierabdeckung (500) eine Einführungsnut (530a) enthält, in die das Befestigungselement (531) eingeführt ist, und
wobei die Einführungsnut (530a) einen ersten Abschnitt (530b), in den der Befestigungskörper (531b) eingeführt ist, und einen zweiten Abschnitt (530c) enthält, auf dem der erste horizontale Verlängerungsvorsprung (531d) aufsitzt, und
wobei der Endabschnitt (322) der Anschlussstromschiene (320) auf dem ersten horizontalen Verlängerungsvorsprung (531d) aufsitzt und mit diesem in Kontakt steht.

2. Batteriemodul (1000) nach Anspruch 1, wobei der Befestigungsstift (550) so konfiguriert ist, dass er mit dem Befestigungsloch (531a) im Befestigungselement (531) verschraubt ist.

3. Batteriemodul (1000) nach Anspruch 1, wobei der Befestigungskörper (531b) eine rechteckige Säulenform aufweist.

4. Batteriemodul (1000) nach Anspruch 1, wobei sich der erste horizontale Verlängerungsvorsprung (531d) horizontal von der Seitenfläche des Befestigungskörpers (531b) erstreckt.

5. Batteriemodul (1000) nach Anspruch 1, wobei der Befestigungskörper (531b) ferner einen ersten Seitenflächenabschnitt (531c) enthält, der sich in einer Breitenrichtung des Batteriemoduls (1000) erstreckt, und
wobei der erste horizontale Verlängerungsvorsprung (531d) an einer Oberseite des ersten Seitenflächenabschnitts (531c) angeordnet ist.

6. Batteriemodul (1000) nach Anspruch 1, wobei der Befestigungskörper (531b) ferner ein Paar von ersten Seitenflächenabschnitten (531c) umfasst, die sich in einer Breitenrichtung des Batteriemoduls (1000) erstrecken und parallel zueinander beabstandet sind, und
wobei der erste horizontale Verlängerungsvorsprung (531d) an einer Oberseite jedes ersten Seitenflächenabschnitts (531c) des Paars von ersten Seitenflächenabschnitten (531c) angeordnet ist.

7. Batteriemodul (1000) nach Anspruch 1, wobei der Befestigungskörper (531b) ferner umfasst:
ein Paar von ersten Seitenflächenabschnitten (531c), die sich in einer Breitenrichtung des Batteriemoduls (1000) erstrecken und parallel zueinander beabstandet sind; und
ein Paar von zweiten Seitenflächenabschnitten (531e), die jeweils das Paar von ersten Seitenflächenabschnitten (531c) verbinden und voneinander beabstandet sind.

8. Batteriemodul (1000) nach Anspruch 1, ferner umfassend:
einen zweiten horizontalen Verlängerungsvorsprung (531f), der sich von einer weiteren Seitenfläche des Befestigungskörpers (531b) an einer Oberseite des Befestigungskörpers (531b) nach außen erstreckt.

9. Batteriemodul (1000) nach Anspruch 8, wobei der erste horizontale Verlängerungsvorsprung (531d) und der zweite horizontale Verlängerungsvorsprung (531f) auf dem zweiten Abschnitt (530c) der Einführungsnut (530a) aufsitzen.

10. Batteriemodul (1000) nach Anspruch 8, wobei sich der zweite horizontale Verlängerungsvorsprung (531f) horizontal von der weiteren Seitenfläche des Befestigungskörpers (531b) erstreckt.

11. Batteriemodul (1000) nach Anspruch 8, wobei der Befestigungskörper (531b) ferner einen Seitenflächenabschnitt (531e) des Befestigungskörpers (531b) umfasst, der sich in einer Längenrichtung des Batteriemoduls (1000) erstreckt, und wobei der zweite horizontale Verlängerungsvorsprung (531f) an einer Oberseite des Seitenflächenabschnitts (531e) angeordnet ist.

12. Batteriemodul (1000) nach Anspruch 8, wobei der Befestigungskörper (531b) ferner ein Paar von Seitenflächenabschnitten (531e) umfasst, die sich in einer Längenrichtung des Batteriemoduls (1000) erstrecken und parallel zueinander beabstandet sind, und wobei der zweite horizontale Verlängerungsvorsprung (531f) an einer Oberseite jedes des Paars von Seitenflächenabschnitten (531e) angeordnet ist.

## Revendications

1. Module de batterie (1000) comprenant :
un empilement de cellules de batterie (100) dans lequel de multiples cellules de batterie (110) sont empilées ;
un boîtier de module (200) configuré pour loger l'empilement de cellules de batterie (100) ;
une borne de barre-bus (320) disposée sur un côté de l'empilement de cellules de batterie (100) ;
un couvercle isolant (500) disposé sur un côté du boîtier de module (200), une partie d'extrémité (322) de la borne de barre-bus (320) étant positionnée sur le couvercle isolant (500) ;
un élément de fixation (531) ayant un trou de fixation (531a) configuré pour fixer la partie d'extrémité (322) de la borne de barre-bus (320), l'élément de fixation (531) étant disposé sous la partie d'extrémité (322) de la borne de barre-bus (320) dans le couvercle isolant (500) ; et
une goupille de fixation (550) configurée pour être couplée au trou de fixation (531a) dans l'élément de fixation (531) à travers la partie d'extrémité (322) de la borne de barre-bus (320),
dans lequel l'élément de fixation (531) comprend un corps de fixation (531b) comprenant le trou de fixation (531a), et une première saillie d'extension horizontale (531d) s'étendant vers l'extérieur depuis une surface latérale du corps de fixation (531b) au niveau d'une partie supérieure du corps de fixation (531b),
dans lequel le couvercle isolant (500) comprend une rainure d'insertion (530a) dans laquelle l'élément de fixation (531) est inséré, et
dans lequel la rainure d'insertion (530a) comprend une première partie (530b) dans laquelle le corps de fixation (531b) est inséré, et une seconde partie (530c) sur laquelle la première saillie d'extension horizontale (531d) prend appui, et
dans lequel la partie d'extrémité (322) de la borne de barre-bus (320) prend appui sur et vient en contact avec la première saillie d'extension horizontale (531d).

2. Module de batterie (1000) selon la revendication 1, dans lequel la goupille de fixation (550) est configurée pour être couplée par vissage au trou de fixation (531a) dans l'élément de fixation (531).

3. Module de batterie (1000) selon la revendication 1, dans lequel le corps de fixation (531b) a une forme de colonne rectangulaire.

4. Module de batterie (1000) selon la revendication 1, dans lequel la première saillie d'extension horizontale (531d) s'étend horizontalement depuis la surface latérale du corps de fixation (531b).

5. Module de batterie (1000) selon la revendication 1, dans lequel le corps de fixation (531b) comprend en outre une première partie de surface latérale (531c) s'étendant dans une direction de la largeur du module de batterie (1000), et
dans lequel la première saillie d'extension horizontale (531d) est disposée au niveau d'une partie supérieure de la première partie de surface latérale (531c).

6. Module de batterie (1000) selon la revendication 1, dans lequel le corps de fixation (531b) comprend en outre une paire de premières parties de surface latérale (531c) s'étendant dans une direction de la largeur du module de batterie (1000) et espacées parallèlement l'une à l'autre, et
dans lequel la première saillie d'extension horizontale (531d) est disposée au niveau d'une partie supérieure de chaque première partie de surface latérale de la paire de premières parties de surface latérale (531c).

7. Module de batterie (1000) selon la revendication 1, dans lequel le corps de fixation (531b) comprend en outre :
une paire de premières parties de surface latérale (531c) s'étendant dans une direction de la largeur du module de batterie (1000) et espacées parallèlement l'une à l'autre ; et
une paire de secondes parties de surface latérale (531e) reliant respectivement la paire de premières parties de surface latérale (531c) et espacées l'une de l'autre.

8. Module de batterie (1000) selon la revendication 1, comprenant en outre :
une seconde saillie d'extension horizontale (531f) s'étendant vers l'extérieur depuis une autre surface latérale du corps de fixation (531b) au niveau d'une partie supérieure du corps de fixation (531b).

9. Module de batterie (1000) selon la revendication 8, dans lequel la première saillie d'extension horizontale (531d) et la seconde saillie d'extension horizontale (531f) prennent appui sur la seconde partie (530c) de la rainure d'insertion (530a).

10. Module de batterie (1000) selon la revendication 8, dans lequel la seconde saillie d'extension horizontale (531f) s'étend horizontalement depuis l'autre surface latérale du corps de fixation (531b).

11. Module de batterie (1000) selon la revendication 8, dans lequel le corps de fixation (531b) comprend en outre une partie de surface latérale (531e) du corps de fixation (531b) s'étendant dans une direction de la longueur du module de batterie (1000), et
dans lequel la seconde saillie d'extension horizontale (531f) est disposée au niveau d'une partie supérieure de la partie de surface latérale (531e).

12. Module de batterie (1000) selon la revendication 8, dans lequel le corps de fixation (531b) comprend en outre une paire de parties de surface latérale (531e) s'étendant dans une direction de la longueur du module de batterie (1000) et espacées parallèlement l'une à l'autre, et
dans lequel la seconde saillie d'extension horizontale (531f) est disposée au niveau d'une partie supérieure de chacune de la paire de parties de surface latérale (531e).
